# EUROPEAN PATENT APPLICATION

(11) **EP 0 618 715 A1**
(43) Date of publication of application: **05.10.1994**
(21) Application number: 92924911.8
(22) Date of filing: 14.12.1992
(51) Int. Cl.: H04N 1/00, G06F 3/033

(54) **ELECTRONIC NOTEPAD**

(30) Priority: 13.12.1991 JP 330622/91
(71) Applicant: KABUSHIKI KAISHA ACE DENKEN, Taito-ku, Tokyo 110 (JP)
(72) Inventor: TAKEMOTO, Takatoshi Kabushiki Kaischa Ace Denken, Taito-ku Tokyo 110 (JP); KAWASHIMA, Kazunari Kabushiki Kaisha Ace Denken, Taito-ku Tokyo 110 (JP)
(74) Representative: Bloch, Gérard
(86) International application number: JP9201623
(87) International publication number: WO9312607

(57) **Abstract**

An electronic notepad which has a plurality of panels (11) connected together at one side of each thereof so that the panels can be spread freely, a display means (12) provided with sheet type displays arranged on the surfaces of the panels to show images, a memory (24) for storing data to be displayed by the display means (12), sensors (13) for detecting the positions in which data is input on the display by handwriting, and a write control means (31) adapted to send a signal for setting the picture elements in the writing positions, which were detected by the sensors (13), on the displays on the panels in a predetermined displaying state, and show the picture elements in a displaying state on the displays.

## Description

### TECHNICAL FIELD

This invention relates to an electronic notebook which is capable of handling data of documents, drawings, etc., as usual notebooks and is very useful for achieving a paperless office.

### TECHNICAL BACKGROUND

In recent years, personal computers, word processors, electronic pocketbooks, etc., have become popular as electronic machines for inputting, recording, and outputting documents, drawings, or the like without using paper or writing tools. However, with the electronic machines, usually data is input with key switches, etc., and displayed on a single screen for output.

Thus, the electronic machines do not enable anybody to easily write (input) data whenever necessary or see the contents written (recorded) on a plurality of pages at a time while comparing them. From this point of view, the electric machines are inferior to usual notebooks, books, etc., in convenience. For this reason, at offices where electronic machines as mentioned above are introduced, in fact, the contents output by the electronic machines are printed out on paper for reference or the electronic machines and paper notebooks, ledgers, etc., are used together for business processing.

Electronic pictures or illustrated books using floppy disk as media are also now on the market. However, they are hard to handle or have a narrow display range and have not become popular; in actual fact, books using normal paper are still published in large quantities.

Therefore, although the electronic machines as described above have been developed and have become widely popular, the amount of paper consumed has not decreased. In fact, it has increased because printout paper is thrown away. As a result, an acute social problem arises from the viewpoints of garbage processing and resource protection.

### DISCLOSURE OF INVENTION

It is therefore an object of the invention to provide an electronic notebook which enables anybody to easily write whenever necessary and see the wide range of recorded contents while comparing them in a sense of turning over leaves like a notebook or a book with paper pages.

To these ends, according to one form of the invention, there is provided an electronic notebook comprising:
a plurality of panels bound on one side so that they can be spread;
a plurality of display means having a thin-plate-like display disposed on a spread face of each of the panels for displaying an image on the display;
a memory for storing data for display by the display means;
a sensor for detecting a write position of a handwriting operation onto a screen displayed on the display; and
write control means responsive to the write position detected by the sensor for sending a signal, to place a picture element at the write position on the display where the writing has been made in a predetermined display state, to the display means for displaying a write state.

The memory can be provided with a storage area corresponding to the display of each of the panels. Image data written by write operation on each panel can be stored in the corresponding area of the memory.

The memory can further have a document data storage area.

The electronic notebook of the invention can further include display control means for controlling so that document data and image data stored in the memory and to be displayed on the same page are displayed on the same display.

The sensor can have pressure-sensitive sensors for detecting a pressing action and the pressure-sensitive sensors can have pressure-sensitive points disposed like a matrix on the display. Of course, the sensor can consist of magnetism detection sensors, for example.

As the sensor, a sensor such as a touch sensor for detecting an entry with a dummy pen in response to touch or contact pressure or a magnetic sensor for detecting an entry in response to magnetism can be used. With the touch sensor, any tool with a sharp point can be used as the dummy pen. With the magnetic sensor, a tool which generates predetermined magnetism from its tip may be used as the dummy pen

In the electronic notebook of the invention, an area for menu selection can be displayed in a part of the display of each panel.

The electronic notebook of the invention can further include rewrite means for converting image data representing a handwritten character into code data and storing the code data in the memory as document data.

The rewrite means can erase the image data converted into the code data and send the code data to the display means for displaying it.

The electronic notebook of the invention can further include page specification means operatively installed in a part of at least any one of the plurality of panels for accepting specification of a page to be displayed on the display.

The display control means can select the page specified with the page specification means from among the document data stored in the memory and send it to the display means for displaying on the corresponding display.

The page specification means can further include a page feed switch for instructing pages of document data displayed on the plurality of display means to be shifted to contiguous display means one page at a time in sequence for displaying.

According to the electronic notebook of the invention, the user can draw characters, etc., by directing a writing tool such as the dummy pen toward the screen surface of the display and using it like a normal pen. The sensor detects the write trace and outputs a detection signal. When receiving the detection signal of the sensor, the write control means places the picture element corresponding to the write detection position by the sensor on the display screen in a predetermined display state. Thus, the user can draw characters or graphics, etc., as desired on the display disposed on the surface of each panel as if he or she drew characters on paper with a pencil or the like.

Moreover, since a plurality of the panels each formed with the display are bound so that they can be spread, the user can see the display contents on each screen in comparison, similarly to turning over the leaves of a notebook or book, and can also write onto the spread screen whenever necessary.

That is, if the user specifies the screen to be referenced or written with the page specification means, the display control means can display the contents of the specified page on the screen of a given panel for the user to see it.

The user can also make additional writes, corrections, underscores, etc., for the contents in the above-mentioned notebook sense; moreover, the new contents after the additional write, etc., are stored in the memory as image date related to document data.

As described above, if the rewrite means is included, handwritten characters can also be coded for storage as document data.

Therefore, the electronic notebook of the invention eliminates completely the need for using paper to prepare, record, or output documents or drawings; it can contribute greatly to promotion of paperless offices, etc.

If the external input/output means is provided, data of documents, etc., contained in external computers, etc., can be read into document storage means via the external input/output means for displaying the data on the screen. This enables the user to reference, correct, etc., the read document in the above-mentioned notebook sense. The data obtained after the correction or underscore is made can also be fed back into the computer, etc., further widening the application range.

If the electronic notebook is provided with color selection switches, the user can select display colors of characters, etc., written onto the display screen as desired; operability of the electronic notebook is further improved.

### BRIEF DESCRIPTION OF THE DRAWINGS

In the accompanying drawings:
Figure 1 is a front view of an electronic notebook according to one embodiment of the invention;
Figure 2 is a perspective view of the electronic notebook according to the embodiment of the invention;
Figure 3 is a block diagram showing the configuration of the electronic notebook according to the embodiment of the invention; and
Figure 4 is a flowchart showing the operation of the electronic notebook according to the embodiment of the invention.

### BEST MODE FOR CARRYING OUT THE INVENTION

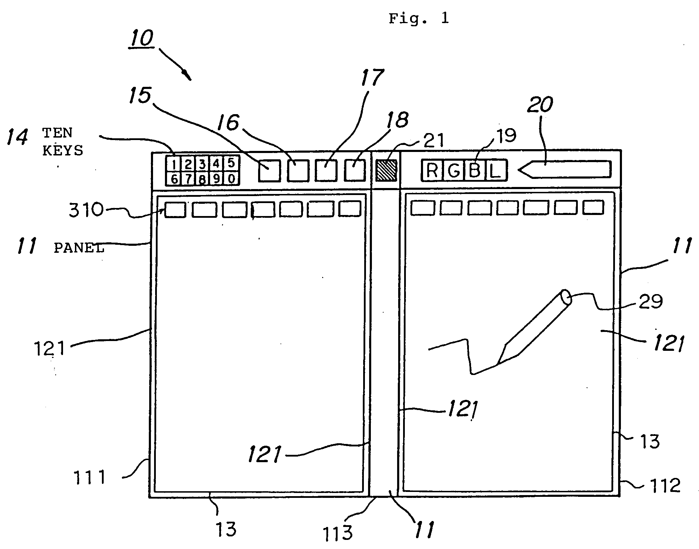

Referring now to the accompanying drawings of Figures 1 to 4, there is shown one embodiment of the invention.

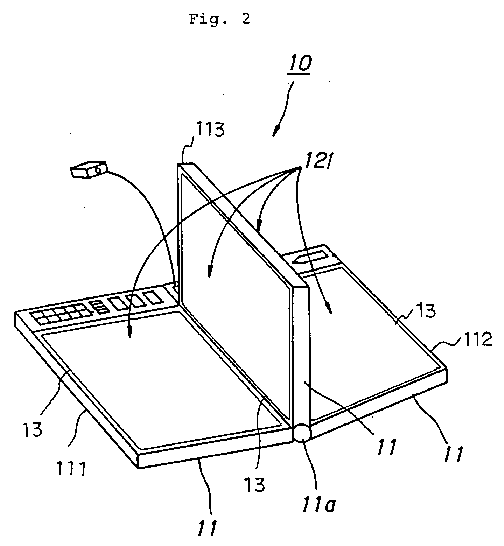

An electronic notebook 10 according to the embodiment of the invention has a plurality of panels 11 bound with a single shaft 11a on one side so that the electronic notebook 10 can be spread, as shown in Figure 2. In the embodiment, two of the panels 11 function as two cover panels 111 and 112 making up the cover of the electronic notebook 10 and one sandwiched between the cover panels functions as an intermediate panel 113, which can be placed over either of the cover panels 111 and 112. That is, the panels are bound so that the electronic notebook 10 can be spread. The cover panels 111 and 112 can also be put on each other with the intermediate panel between. As a result, a so-called notebook form can be made.

Although three panels are used in the example, the invention is not limited to three panels, of course. For example, the intermediate panel may be omitted or a greater number of panels can be used.

The cover panels 111 and 112 have top portions projected from the top of the intermediate panel. An external connection connector 21 serving as external input/output means for connecting to an external system is provided in a space sandwiched between the projections of the cover panels 111 and 112, namely, on the outside of the top of the intermediate panel 113.

Display and write means are provided on at least one of the two sides of each panel 11. That is, a liquid crystal display 121 as a display like a thin plate and a touch sensor 13 for detecting a write operation on the surface of the display 121 are located on one side of each of the cover panels 111 and 112 and both sides of the intermediate panel 113.

The liquid crystal display 121 in the embodiment is capable of color display. Of course, it may be a monochrome display. The liquid crystal display 121 is one of the components of the display means 12.

In addition to the liquid crystal displays 121, the display means 12 has a code-image converter (not shown) for converting code data into image data (bit map data), a drive circuit (not shown) for driving the display 121, and video memories (not shown) for storing image data to be displayed for each panel 11.

The video memories are adapted to provide color display. In the embodiment, at least two memories are provided: One for storing code data and image data to display an instruction menu 310 and one for storing image data of handwritten input of characters, graphics, etc. The drive circuit overlays the image data stored in the video memories on each other for display on the liquid crystal display 121. Only the video memory for storing handwritten characters, etc., may be adapted to handle color display; images to display code data may be monochrome.

The touch sensor 13 consists of transparent-film pressure sensors stuck on the surface of the display 121 for detecting touch or contact in response to pressure on the surface, for example. In fact, the pressure sensors are located at a large number of detection points arranged like a matrix and senses substance contact separately. Since they are laid out like a matrix, which pressure sensor is pressed can be known. Thus, the pressed point on the screen can be detected as an address.

The pressure sensors can be laid out corresponding to display picture elements of the liquid crystal display 121, for example. On the layout of the pressure sensors, however, the pressure sensors may correspond to the display picture elements in positional relationship and they need not correspond to each other on a one-to-one basis. For example, one pressure-sensitive point may be located corresponding to a number of display picture elements.

For touch or contact with the touch sensor 13, any tool having a sharp point of predetermined thinness may be used. For example, a rod like a pen can be used. In the embodiment, a rod like a pen is provided as a dedicated writing rod, called a dummy pen. In the embodiment, the dummy pen is also used to select an entry out of the instruction menu 310 displayed on the screen and to specify the range of characters to be replaced, etc., as described below.

The cover panel 111 also has ten keys 14 as numeric keys, a page specification key 15, a page feed key 16, an auxiliary power capacity indicator 17, and a power switch 18 disposed on the top, as shown in Figure 1. The ten keys 14, the page specification key 15, and the page feed key 16 make up page specification means of the invention.

The ten keys 14 are provided to set the page number of data to be displayed on the right cover panel 112 in Figure 1. Setting the page number is not limited to the cover panel 112; the page number can be set for any desired panels. Panel selection can be made via the menu 310 displayed on the liquid crystal display 121 of each panel, for example. Unless otherwise specified, data on the setup page is displayed on the liquid crystal display 121 of the cover panel 112 as the default system configuration. Of course, for simplicity, any page numbers may be specified only for the liquid crystal display of the cover panel 112.

The page specification key 15 is provided to instruct a CPU 22 to input the page number set with the ten keys 14 as the specified page. The page feed key 16 is provided to instruct the CPU 22 to shift pages of document data displayed on display means 12 to contiguous display means 12 (for example, left in Figure 1) one page at a time in sequence.

The auxiliary power capacity indicator 17, which is provided to indicate the remaining amount of an auxiliary power supply 25 (described below), goes on when the power capacity of the auxiliary power supply 17 falls below a given value. The fact that the remaining amount is low may be indicated by an intensity change or color change.

The power switch 18 is a switch used to turn the power of the entire electronic notebook on and off.

Color selection switches 19 and a holder 20 for detachably holding a dummy pen 29 are disposed on the top of the cover panel 112. The holder 20 is provided to mount the dummy pen 29 when the pen is not used.

The color selection switches 19 are switches to specify the color of a diagram to be drawn on the liquid crystal display 121. In the embodiment, four selection switches are provided, three of which correspond to selection of R (red), G (green), B (blue), and L (light). In addition to the three primary colors, various colors produced by combining the primary colors and L (light) can be specified by selecting the switches in combination. For example, if R, L, and G are selected in order, a color produced by combining light red and dark green is selected. If G, L, B, and L are selected in order, a color produced by combining light green and light blue is selected.

The external connection connector 21 is a connector used to transfer data to and from external machines such as personal computers and word processors.

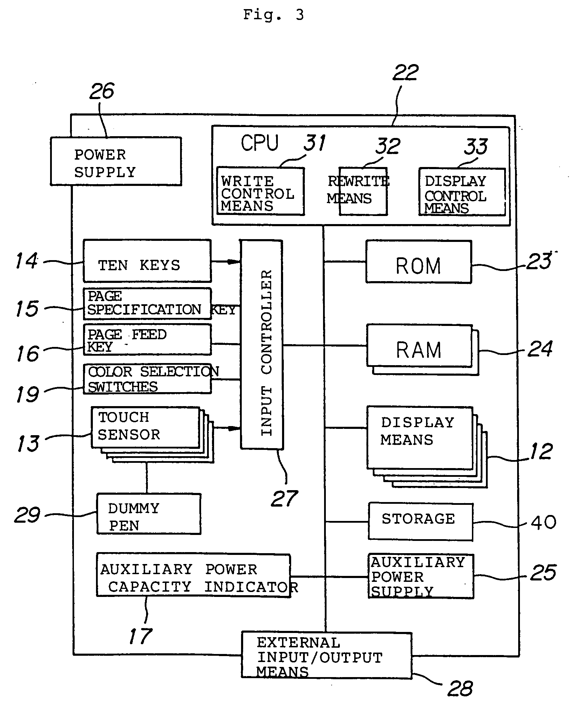

Next, the hardware system configuration for information processing in the embodiment is described in detail with reference to Figure 3.

The information processing hardware system used in the embodiment is configured as shown in Figure 3. That is, the embodiment system comprises the central processing unit (CPU) 22 which executes processing including system control, a ROM (read-only memory) to store operation programs of the CPU 22, a RAM (random access memory) 24 serving as means for storing data, etc., the display means 12, a storage 40, an input controller 27 for controlling inputs from the switches and the touch sensor 13, an auxiliary power supply 25, a power supply 26, the auxiliary power capacity indicator 17, and the external input/output means (interface) 28.

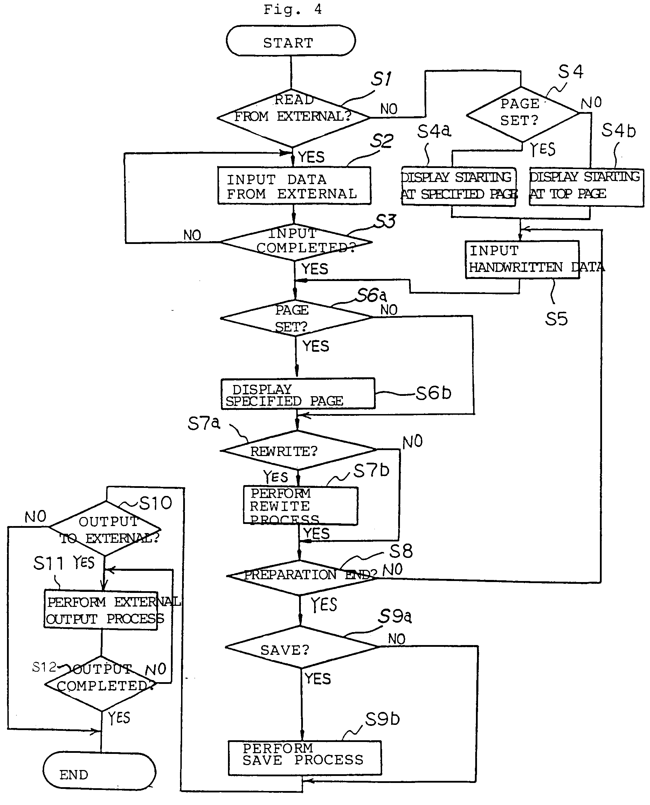

The ROM 23 stores the programs to be executed by the CPU 22. That is, it stores various programs including programs to function as screen write control means 31, rewrite means 32, and display control means 33 which will be executed by the CPU 22. Figure 3 schematically shows the state in which the functions are provided in the CPU 22 for description. For example, a program which executes a sequence as shown in Figure 4 is contained as the program.

When receiving commands from the switches 14-16 and 19 and a detection signal from the touch sensor 13 via the input controller 27, the CPU 22 executes processing according to the programs registered in the ROM 23. For example, the CPU 22 performs processing (described below) while controlling the RAM 24, the display means 12, the external input/output means 28, etc., according to the procedure shown in Figure 4.

The display control means 33 executed by the CPU 22 reads the specified portion of various data such as document data from the RAM 24 and sends it to the display means 12 and also sends the instruction menu 310 for editing, etc., to the display means 12 for displaying it on each liquid crystal display 121.

The instruction menu 310 contains various submenus for a data input instruction from an external system, a write end instruction, write operation specification, an instruction to save written images, rewrite operation specification, etc. As the write operation specification, for example, line type, line thickness, density, erasure, copy, move, filling-in, etc., can be specified. As the rewrite operation specification, the range of characters to be replaced, the range of characters used for replacement, a character recognition execution instruction, object characters, etc., can be specified. The menu data is prestored in the RAM 24.

The menu 310 can take a hierarchical structure where when an entry is selected out of a high-ranked menu for detail specification, the corresponding low-ranked detail menu can be opened. The menu 310 may also be displayed with icons as well as characters, symbols, etc.

When receiving a signal from the touch sensor 13 input via the input controller 27, the write control means 31 determines which of the liquid crystal displays 121 the signal is input to, and which area on the display it is input to. The latter is a determination to discriminate between menu specification and handwritten input.

When it is a menu input, the write control means 31 compares the input position with menu display positions stored in the RAM 24, recognizes that the menu (entry) at the display position matching the input position is selected, and calls the program executing the command corresponding to the menu (entry).

When it is an input of handwritten characters or the like, the write control means 31 finds display picture elements based on prespecified display conditions for addresses input in sequence and sets the display density, etc., and sends them to the image data video memory of the display means 12. When receiving characters etc., the display means 12 displays on the liquid crystal display 121 of the corresponding panel 11.

When receiving a command from the write control means 31 in response to menu selection, the rewrite means 32 acknowledges a rewrite instruction, specification of the range of characters to be replaced, and specification of the range of characters used for replacement.

The rewrite means 32 also recognizes characters and further sends an object character found by character recognition to the display means 12 for displaying it at a proper position on the corresponding liquid crystal display 121, for example, on the bottom of the screen. Then, the rewrite means 32 is responsive to a selection instruction from the write control means 31 for adopting the specified object character for rewriting.

Programs, a recognition dictionary, etc., required for character recognition are prestored in the ROM 23 or the RAM 24, for example. When the programs are stored in the RAM 24, they will be loaded from the storage 40. If the RAM 24 is backed up with a battery, once the programs are loaded into the RAM 24, they need not be loaded each time the system is started.

Various instruction switches such as the ten keys 14, the page specification key 15, the page feed key 16, and the color selection switches 19 and the touch sensor 13 are connected to the input controller 27, as described above.

The external input/output means 28 has a data format conversion function as required. For example, when the data stored in the storage means 24 is image data for the display means 12 and an external machine such as a word processor to which the data is to be output handles characters, etc., with code data, the external input/output means 28 has the function of converting the image data into predetermined code data.

When the power supply 26 is turned off unexpectedly, the auxiliary power supply 25 is used to back it up for preventing data in the storage means 24, etc., from being lost.

The storage 40 can be a storage using storage media of disk type such as magnetic, optical, or magneto-optic disk. In the embodiment, it is a magnetic disk drive. The storage 40 stores various pieces of data. It may also store the programs of the CPU 22. When the power of the system is turned off, the storage 40 is also used to save the data stored in the RAM 24.

Next, the operation of the electronic notebook according to the embodiment will be described in conjunction with Figure 4.

When the power switch 18 is turned on, the CPU 22 functions as the display control means 33 for displaying the menu 310 on the top of each liquid crystal display 121. Then, the CPU 22 repeats processing at steps S1 to S12 as shown in Figure 4. The processing is described according to the steps.

At step S1, the CPU 22 functions as the write control means 31 for monitoring an input signal from the input controller 27. When a signal is input, the CPU examines the signal contents, namely, determines which liquid crystal display 121 the signal is input on and which area of the display screen it is input to. If the input signal indicates selection of a menu to specify data input from an external system, CPU control goes to step S2; otherwise, to step S4.

At step S2, the CPU 22 performs external data input processing. Input from the storage 40 or an external computer is possible as the external data input. These are selected via the menu. The external input data is stored in the RAM 24 as document data consisting of a number of pages each corresponding to the display contents of one screen of the liquid crystal display 121, and the CPU control goes to step S3. At step S3, the CPU 22 determines whether or not the external data input is completed. If it is completed, CPU control goes to step S6; otherwise, it returns to step S2.

At step S4, the CPU 22 determines whether or not page specification is made with the page specification key 15 or the page feed key 16. If the specification is made, the CPU 22 sends display data starting at the specified display page to the display means 12 according to the specification at step S4a; otherwise, it sends display data starting at the first page to the display means 12 for displaying the data at step S4b. That is, when the page specification key 15 is pressed, the contents of the page number specified with the ten keys 14 just before the key 15 is pressed (those stored in the storage means 24) are displayed on the first display, for example, the right display 121 in Figure 1.

If the page feed key 16 is pressed at this time, the displayed pages are shifted in order. In this case, if no data is registered in the storage means 24, blank pages are displayed.

At step S5, the CPU 22 functions as the write control means 31 for accepting a write with the dummy pen 29. That is, the CPU 22 determines that it is input from the touch sensor 13 of which panel. The CPU 22 also finds display picture elements based on the prespecified display conditions for addresses input in sequence and sets the display density, etc., then sends them to the image data video memory of the display means 12 and the area of the RAM 24 in which the image data on the corresponding page is stored. When receiving them, the display means 12 displays the picture elements whose input is detected by the touch sensor on the corresponding liquid crystal display in the specified display format.

Here, lines, characters, graphics, etc., can be written as desired. At this time, various functions provided at the menu, such as move, copy, delete, and filling in, can be used. The functions enable the user to, for example, make a note, write an illustration, move or copy an entry, erase the entry as if rubbing it out with an eraser, and fill in a frame of graphics.

When document data is displayed, the functions enable the user to correct, write, mark, or draw anything for the document data.

When no write representation signal remains input for a predetermined time, the CPU 22 goes to step S6a and determines whether or not page specification is made with the page specification key 15 or the page feed key 16 (step S6a). If it is made, the CPU 22 displays the specified page as at step S4a; otherwise, the CPU 22 skips step S6b and goes to step S7.

In the state, the CPU 22 checks the input controller to see if an input from the switches exists or if menu selection is made. If an input exists, the CPU 22 performs processing corresponding thereto. Here, assume that a rewrite process for converting handwritten characters into code data is requested (step S7a). The CPU 22 functions as the rewrite means 32 at step S7b. When no instruction is given, the CPU 22 goes to step S8.

At step S7b, the CPU 22 accepts specification of the characters or area to be replaced. That is, a message is displayed on the screen requesting the user to specify the area. When the user specifies the range with the dummy pen, a similar message is displayed on the screen requesting the user to specify the range of handwritten characters to be replaced.

When the range of the handwritten characters to be replaced is specified, the CPU 22 executes character recognition for the handwritten characters in the specified range. Well known methods can be used for the character recognition method. For example, in one of the methods, the handwritten character pattern is compared with character pattern data stored in a provided recognition dictionary and when the most accurately matched pattern is found, the handwritten character is recognized as the character of the pattern.

When object characters are obtained, the CPU 22 displays them on the bottom of the screen of the corresponding liquid crystal display 121. When the user selects any of the objects with the dummy pen 29, the CPU 22 defines the object as the formal character or character string after rewrite. Now, the handwritten characters have been converted into code.

When document data is already displayed on the screen, the character or character string replaces the character or character string of the document data contained in the prespecified area. When the user selects character insertion from the menu, a newly recognized character or character string is inserted into the character string instead of replacement.

When the handwritten characters have been processed as described above, they are erased from the screen.

If no document data is displayed, when rewrite process is performed, a newly recognized character or character string is written into the blank portion in the specified range. This means that a new document is prepared.

The recognized character data is stored in the document data file stored in the RAM 24 as a part of character string.

Next, the CPU 22 checks whether or not the input operation of characters, etc., terminates by seeing if an end instruction in the menu 310 is selected at step S8. If no end instruction is given, the CPU 22 returns to step S5 and repeats the steps described above until an end instruction is input.

If the end instruction is given, then the CPU 22 determines whether or not prepared document data, image data, etc., is to be saved at step S9a. For this purpose, an inquiry message is displayed on the screen requesting the user to specify whether or not the data is to be saved. If the user selects save from the menu, the document data and image data are related to each other, then stored in the storage 40 at step S9b. That is, they are saved with information of document data pages where the image data is to be displayed.

Next, after the data is saved or after the user responds to the inquiry message with NO, the CPU 22 checks whether or not data is to be output to an external system at step S10. To do this, the CPU 22 displays a message on the screen requesting the user to specify whether or not data is to be externally output, and waits for the user to respond to the message with selection from the menu 310. In this case, a computer, word processor, or the like is possible as the external device. If data is to be externally output, the CPU 22 performs data transmission processing at step S11 and continues it until completion at step S12.

When the data transmission processing is completed or no transfer processing is performed, the operation of the embodiment system terminates. In this state, control returns to the initial menu screen.

At handwriting input, input line color can be specified by using the color selection switches 19.

In the embodiment, document data is input and edited and handwriting is made into the document data as an example, but image data can be input and edited, of course.

Further, in the embodiment, the liquid crystal display is shown as a display example, but the display may be any display if it is thin, and is not limited to the liquid crystal display.

Thus, according to the electronic notebook 10, if a tool having a sharp point, such as the dummy pen 29, is brought into contact with the surface of the screen of the display means 12 and characters, etc. in response to the thinness of the line to be drawn, and operated as with a normal pen, the touch sensor 13 detects the contact and in response to the detection, the CPU 22 (write control means 31) places the picture element at the pressed position on the screen of the display means 12 in a predetermined display state. Therefore, the user can draw characters, graphics, etc., as desired on the liquid crystal display 121 disposed on the surface of each panel 11 as if he or she drew them on paper with a pencil.

Moreover, a plurality of the panels 11 formed with the display means 12 are bound so that they can be spread, thus the user can see the display on each screen in comparison as if he or she turned over the leaves of a notebook or book, and can also write onto the spread screen whenever necessary.

The characters, graphics, etc., drawn on the display screen are stored in the RAM 24 by the CPU 22. That is, data equivalent to the characters, graphics, etc., on the display screen can be stored within the range of the capacity of the RAM 24 with pages related to the data, and can be called for handling whenever necessary. If the user specifies the document page for reference or write with the page specification means 14, 15, or 16, the CPU 22 (display control means) displays the contents of the specified page on the screen of the predetermined panel 11.

The CPU 22 (rewrite means 32) executes character recognition and inserts the recognized character or character string in the specified position of the displayed document data as a new character or character string or replaces the character or character string at the specified position with the new character or character string.

Thus, according to the embodiment, the user can make document reference, additional write, correction, underscore, etc., in the above-mentioned notebook sense. Moreover, the contents of the additional write, etc., can be related to document data for storage.

Further, the external input/output means 28 enables data to be shared with external computers, word processors, etc. That is, data of documents, etc., contained in the external computers, etc., can be read into the RAM via the external input/output means 28 for displaying on the screen. Then, rather than seeing the screen at a given distance as the display of a computer or the like, the user can touch an open page like a book or notebook and write underscores with the dummy pen 29 with color specification and enter new characters or graphics for referencing or correcting the document in a notebook sense. The data obtained after the correction or underscore is made can also be fed back into the computer, etc.

Therefore, for example, to input a document such as a patent specification into a computer and check the contents, it can be read into the electronic notebook so that the user can underscore check points and important items with color such as red, blue, etc. and display a drawing on another page at the same time for taking notes while looking at the drawing. Thus, the user can handle it in the same way as if it were a printed-out specification; the electronic notebook is extremely useful.

Therefore, the electronic notebook can eliminate the need for using paper to prepare, record, or output documents or graphics; it can contribute greatly to promotion of paperless offices, etc.

Although a touch sensor for detecting touch or contact pressure is used as the touch sensor in the embodiment, the invention is not limited to it. For example, a sensor for detecting magnetism may be used, in which case a tool which generates magnetism from its tip needs to be used as the dummy pen.

## Claims

1. An electronic notebook comprising:
a plurality of panels bound on one side so that they can be spread;
a plurality of display means having a thin-plate-like display disposed on a spread face of each of said panels for displaying an image on said display;
a memory for storing data for display by said display means;
a sensor for detecting a write position of a handwriting operation onto a screen displayed on said display; and
write control means responsive to the write position detected by said sensor for sending a signal, to place a picture element at the write position on said display where the writing has been made in a predetermined display state, to said display means for displaying a write state.

2. The electronic notebook as claimed in claim 1 wherein said memory can be provided with a storage area corresponding to the display of each of said panels and image data written by write operation on each panel is stored in the corresponding area of said memory.

3. The electronic notebook as claimed in claim 2 wherein said memory further has a document data storage area.

4. The electronic notebook as claimed in claim 3 further including display control means for controlling so that document data and image data stored in said memory and to be displayed on the same page are displayed on the same display.

5. The electronic notebook as claimed in claim 3 wherein said sensor has pressure-sensitive sensors for detecting a pressing action and said pressure-sensitive sensors have pressure-sensitive points disposed like a matrix on the display.

6. The electronic notebook as claimed in claim 5 wherein an area for menu selection is displayed on a part of the display of each panel.

7. The electronic notebook as claimed in claim 4 further including rewrite means for converting image data representing a handwritten character into code data and storing the code data in said memory as document data.

8. The electronic notebook as claimed in claim 7 wherein said rewrite means erases the image data converted into the code data and sends the code data to said display means for displaying it.

9. The electronic notebook as claimed in claim 4 further including page specification means operatively installed in a part of at least any one of said plurality of panels for accepting specification of a page to be displayed on the display.

10. The electronic notebook as claimed in claim 9 wherein said display control means selects the page specified with said page specification means from among the document data stored in said memory and sends it to said display means for displaying on the corresponding display.

11. The electronic notebook as claimed in claim 9 wherein said page specification means further includes a page feed switch for instructing pages of document data displayed on said plurality of display means to be shifted to contiguous display means one page at a time in sequence for displaying.
